# EUROPEAN PATENT APPLICATION

(11) **EP 1 923 377 A2**
(43) Date of publication of application: **21.05.2008**
(21) Application number: 07121040.5
(22) Date of filing: 19.11.2007
(51) Int. Cl.: C05D 3/02, C05F 1/00, C05F 3/00

(54) **A process for producing a fertiliser**

(30) Priority: 17.11.2006 IE 20060836; 17.11.2006 GB 0622961
(71) Applicant: MacDonald, Michael, Mullingar, County Westmeath (IE); O'Keeffe, Niall, Killucan, County Westmeath (IE)
(72) Inventor: MacDonald, Michael, Mullingar, County Westmeath (IE); O'Keeffe, Niall, Killucan, County Westmeath (IE)
(74) Representative: Brennan, Eimer Mary

(57) **Abstract**

The present invention relates to a process for producing a fertiliser from a mix comprising at least one source of activated calcium oxide and organic waste. The organic waste has a dry matter content of greater than 65% and comprises greater than 70% by weight of the mix. The organic waste could be any of meat and bone meal (MBM), green waste, poultry waste or mushroom waste. The invention further relates to the fertiliser produced.

## Description

### Introduction

The present invention relates to a process for producing a fertiliser from a mix comprising at least one source of activated calcium oxide and organic waste. The invention further relates to the fertiliser produced.

It is well known to produce fertilisers from a source of activated calcium oxide (CaO) and organic waste. PCT publication no. WO 2004/069770 discloses a process for the production of a fertiliser from a dry mix comprising fly ash and organic waste, wherein the organic waste comprises between 30% and 70% by weight of the dry mix. Although a significant amount of organic waste can be transformed into fertiliser by this process, due to the changing technical requirements in the specification of certain types of organic waste such as meat and bone meal, it is now necessary to be able to use a higher proportion of organic waste in order to produce a suitable fertiliser.

One of the recent changes in meat and bone meal processing in Ireland is that most of the tallow fat present in meat and bone meal is being removed as part of the drying process. The main reason for this removal is that tallow is now considered to be a high value product, and thus has uses in other production processes. The effect of this however is that the resultant meat and bone meal has a lower energy value and thus a higher portion of meat and bone meal is required to produce a fertiliser of the same standard.

Additionally, due to the excessive amount of organic waste produced annually there is a need for a process for producing a fertiliser which can utilise higher percentages of organic waste.

Previous attempts however to incorporate higher percentages of organic waste in fertiliser production have resulted in fertilisers with only partially transformed organic waste which are unsuitable for further use. Thus there is a need for a process for producing a fertiliser using a higher percentage of organic waste which allows more of the organic waste to be transformed into fertiliser during processing.

### Statements of Invention

According to the invention there is provided a process for producing a fertiliser from a mix comprising at least one source of activated calcium oxide and organic waste;
characterised in that;
the mix comprises greater than 70% organic waste by weight of the mix, and the organic waste has a dry matter content of greater than 65%, the process comprising:
obtaining the organic waste and determining the average temperature thereof;
mixing the organic waste with the at least one source of calcium oxide so as to provide a dry mix having a total calcium oxide content in the region of between 1% and 10% by weight, wherein the amount of calcium oxide required is dependent on the temperature of the organic waste;
adding to the dry mix between 2% and 6% water by weight to activate the total calcium oxide and to form the mix;
allowing the temperature of the mix to increase; and
storing the mix for a residence time dependent on both the temperature of the organic waste and the amount of total calcium oxide in the mix to transform the mix to fertiliser while allowing the fertiliser to cool to a temperature of less than 25°C.

It has been found that there is a relationship between the temperature of the organic waste, the total amount of activated calcium oxide and the residence time that the mix must be stored for in order to allow transformation into fertiliser. It is therefore possible to use this relationship to allow a higher percentage of organic waste to be incorporated into the mix for transformation to a fertiliser. Specifically, more rapid transformation of the mix into fertiliser occurs by using warm to hot organic waste.

This allows a reduction in the amount of activated calcium oxide necessary to induce transformation. In the specification, the term "transformation" refers to an exothermic chemical reaction between mixed ingredients which results in the alteration of the properties of one or more of the ingredients within the mix. In the specification, the term "by weight" refers to the weight of the fertiliser unless otherwise specified.

A further advantage is that organic waste is readily available commercially in a warm state i.e. fresh from drying. Previously, the organic waste was cooled prior to reprocessing, however now that it has been found that it more advantageous to use the organic waste in its warm state; this obviates the cooling step and thus reduces costs. A still further advantage of the process of the invention is that as the fertiliser is stored and allowed to cool gradually, maximum transformation of the mix to the fertiliser will occur and there is no longer a need to provide a cooler. This has an obvious cost advantage. The storage residence time can also be easily modified to suit the requirements of the processor.

As the resultant fertiliser is produced from such a high content of nutrient bearing organic waste this has the associated advantage that the resultant fertiliser will have a high nutrient value and thus will be a more effective fertiliser. For example, if the organic waste is meat and bone meal, the resultant fertiliser will have a high nutrient value of at least 2.5% available phosphorus, at least 2.5% slow release bound phosphorus and at least 4% nitrogen.

The advantage of adding water to the dry mix is that it is free water and thus activates the total calcium oxide in the mix, resulting in transformation of the mix into fertiliser.

Ideally, the source of calcium oxide comprises one or more of fly ash having a calcium oxide content in the region of up to 50% by weight of the fly ash and pure calcium oxide. The advantage of using fly ash is that it is in itself a waste product, and thus this process is also a useful process for converting another low value waste product into a high value commodity. A further advantage of using fly ash is that it is an unpalatable substance. Fly ash is a high alkaline product with a bitter taste, thus when fly ash is used as a source of calcium oxide to produce the fertiliser, it increases the unpalatability of the fertiliser thus also increasing the edibility prevention thereof. Therefore due to its bitter taste, it is unlikely that any animal would eat the fertiliser.

Preferably, the fly ash comprises between 12% and 40% calcium oxide by weight of the fly ash. The advantage of the fly ash having a higher amount of calcium oxide is that less pure calcium oxide will be required to achieve the recommended total calcium oxide content for transformation. Further preferably, the amount of fly ash and/or calcium oxide added is such as to provide a total calcium oxide content of between 3% and 8% by weight.

Preferably, the temperature of the organic waste is between 10°C and 55°C. Further preferably, the temperature of the organic waste is between 20°C and 40°C. The advantage of the organic waste having a higher temperature which results in a thermal residue is that due to the relationship between organic waste temperature, total amount of activated calcium oxide and storage residence time, either the amount of calcium oxide or residence time can be reduced depending on the requirements of the processor. Either option will lead to a cost reduction without the loss of transformation standards.

Ideally, the organic waste has a dry matter content of greater than 80% and preferably greater than 92%. Generally, higher dry matter contents are as a result of a decrease in the moisture content due to the drying process.

Preferably, the mix comprises between 80% and 95% organic waste by weight of the mix.

Further preferably, the organic waste is selected from the group comprising one or more of meat and bone meal, green waste, poultry waste and mushroom waste.

Ideally, the residence time is between 3 and 12 days.

Preferably, the fertiliser has a dry matter content of greater than 75%.

Further preferably, the process also comprises pelleting or prilling the fertiliser.

According to the invention, there is further provided a fertiliser prepared from a mix comprising at least one source of activated calcium oxide and organic waste;
characterised in that;
the mix comprises greater than 70% organic waste by weight of the mix, and the organic waste has a dry matter content of greater than 65%.

### Detailed Description of the Invention

The invention will be more clearly understood from the following description thereof with reference to the accompanying drawing wherein:

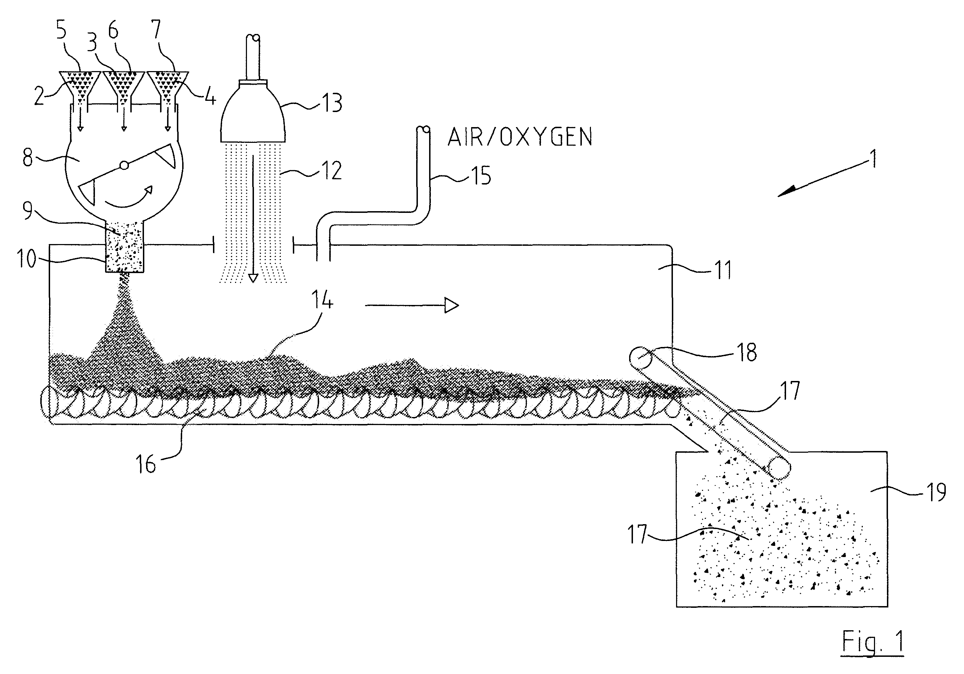

Fig. 1 is a process for producing a fertiliser according to the present invention.

Referring to Fig. 1 there is provided a process for producing a fertiliser indicated generally by the reference numeral 1 comprising a plurality of hoppers for organic waste 2, fly ash 3, and calcium oxide 4, identified by the numerals 5, 6 and 7 respectively. The hopper 5 containing the organic waste 2 also comprises a thermometer (not shown) for determining the average temperature of the organic waste.

The hoppers 5, 6 and 7 feed a mixing station 8 which thoroughly mixes the organic waste 2, fly ash 3 and calcium oxide 4 to form a dry mix 9. A discharge outlet 10 feeds the dry mix 9 into an enclosed stabilisation chamber 11. Water 12 is sprayed into the stabilisation chamber 11 through a water infusion spray 13 and the water 12 is mixed with the dry mix 9 to form a mix 14. Oxygen in the form of air enters the enclosed stabilisation chamber 11 by an air inlet 15. An auger 16 carries the mix 14 through the chamber 11 allowing the exothermic reaction to take place and the temperature of the mix 14 to increase to form a partially transformed fertiliser 17.

A further discharge outlet 18 feeds the partially transformed fertiliser 17 into storage containers 19 where the partially transformed fertiliser 17 is maintained to allow full transformation into fertiliser while allowing the fertiliser to cool.

The mixing station 8, and the stabilisation chamber 11 may comprise a paddle mixer, a revolving drum or an auger and a continuous auger has been found to be most convenient. The fertiliser may be used directly or may be further stored in bunkers or wind rows not shown if desired. The fertiliser may also be further processed at a pelleting or prilling station.

Although Fig. 1 shows the premixing of the organic waste, fly ash and calcium oxide to form a dry mix, in the mixing station, it will be appreciated that all of these components can be added separately to the stabilisation chamber and mixed together there. It will further be appreciated that although the process can be carried out in an enclosed stabilisation chamber with an air/oxygen inlet as shown in Fig. 1 that it would also be possible to carry out the process in an open top mixer, thus force-feeding of oxygen or air is not essential to the process.

The organic waste may be any of meat and bone meal, green waste, poultry waste, or mushroom waste. Meat and bone meal (MBM) is a product of the rendering industry and is also now commonly known as processed animal protein (PAP). MBM Typically comprises about 20% to 55% protein, 38% to 60% ash, 0% to 12% fat and 0% to 8% moisture however these ratios vary with different MBM manufacturing and extraction processes. The fertiliser produced from the MBM will generally have a high calcium content and thus a pH in the region of 7. In the specification the term "green waste" refers to biodegradable waste that can be comprised of garden or park waste such as grass or flower cuttings and hedge trimmings, leaves shrubs, plants and tree trimmings and waste from fruit and food processing generally. The green waste will generally have a lower calcium content and thus will provide a fertiliser having a lower pH of generally in the region of between 4.5 and 5.5. The use of poultry waste provides a fertiliser with a high nitrogen content. Thus the type of fertiliser required can be tailored for a particular use by varying the type of organic waste employed.

The temperature of the organic waste can be determined by any suitable means and is largely dependent on the residual heat of the organic waste. In the specification the term "residual heat" refers to heat acquired during the drying or composting process. The temperature can also be modified by any suitable means if necessary.

The total CaO is provided by the fly ash and pure CaO. Although the process would also work by the addition of pure CaO only, fly ash is also used as a partial source of CaO as it is a waste product. The fly ash is the non-combustible residue that results from burning fuels in an incinerator, boiler or furnace. Fly ash produced from the burning of peat comprises the highest calcium oxide content of between 8% and 45% by weight of the fly ash, and thus is most suitable for this invention. The calcium oxide in its pure form is added to make up any shortfall in the amount of calcium oxide provided by the fly ash.

Activated calcium oxide is defined as any calcium oxide which has reacted with free water and which has the ability to react with organic waste to transform it into fertiliser. Free water is water which is not bound to any other material and is thus easily available for reaction.

The mix prepared to form the fertiliser generally comprises between 70% and 95% organic waste, between 7% and 15% fly ash and between 2% and 7% pure calcium oxide by weight of the mix. The amount of total calcium oxide required is dependent on the temperature of the organic waste at the time of mixing. The efficiency of the transformation of the mix to fertiliser is greatly improved and is much more effective when the fly ash and calcium oxide and water are mixed with warm organic waste having a thermal residue. Thus the temperature of the organic waste affects the amount of total calcium oxide required and also affects the storage residence time.

Table 1 indicates some variations in the amount of CaO and residence time required depending on the temperature of the MBM.

**Table 1: Dependency of MBM (PAP)* temperature, amount of CaO, and residence time**

| **Storage residence time (days)** | **MBM (PAP) inflow Temp (°C)** | **Fly Ash (kg)** | **Active CaO in Fly ash (kg)** | **Pure CaO (kg)** | **Total CaO (kg)** | **Total Fly ash + Pure CaO (kg)** |
|---|---|---|---|---|---|---|
| 4 | 50 | 70 | 17.5 - 23.1 | 12.5 | 30 - 35.6 | 82.5 |
| 4 | 45 | 80 | 20.0 - 26.4 | 12.0 | 32 - 38.4 | 92.0 |
| 4 | 40 | 90 | 22.5 - 29.7 | 12.5 | 35 - 42.2 | 102.5 |
| 4 | 35 | 90 | 22.5 - 29.7 | 12.5 | 35 - 42.2 | 102.5 |
| 4 | 30 | 100 | 25.0 - 33.0 | 7.0 | 32 - 40.0 | 107.0 |
| 5 | 25 | 110 | 27.5 - 36.3 | 17.5 | 40 - 53.8 | 127.5 |
| 6 | 20 | 120 | 30.0 - 39.6 | 20.0 | 50 - 59.6 | 140.0 |
| 8 | 15 | 140 | 35.0 - 46.2 | 20.0 | 55 - 66.2 | 160.0 |
| 10 | 10 | 150 | 37.5 - 49.5 | 25.0 | 62.5 - 74.5 | 175.0 |

| | | | | | | |
|---|---|---|---|---|---|---|
| *In all cases the % dry matter of the MBM (PAP) was 92% to 100%, the total content of the dry mix was 1 tonne. | | | | | | |

Due to the relationship between organic waste temperature, amount of CaO and storage residence time each process can be tailored to suit the requirements of the processor.

In the stabilisation chamber, once the calcium oxide is activated by the addition of free water, the activated CaO will interact with the organic waste in the mix which leads to partial transformation of the mix into fertiliser. As this transformation reaction is an exothermic reaction, the temperature of the mix will initially increase. During storage (bunkering) the active CaO will continue to interact with the protein and mineral particles in the organic waste until the mix has generally been transformed into fertiliser. For example, part of the phosphorus present in the organic waste will be converted to dicalcium phosphate during processing. The temperature will gradually subside until it reaches the approximate temperature of the storage area.

The extent of temperature increase will vary and depend on essential process parameters such as organic waste temperature and amount of CaO. It has been found however that the temperature of the transforming mix will generally increase to greater than 30°C.

It is possible to store the transforming mix/fertiliser in one storage container (bunker) for the complete residence time. Alternatively, the transforming mix/fertiliser can be transferred to different bunkers throughout the storage residence time.

Optionally, further nutrients or trace elements can be added to the fertiliser either in the mixing or prilling station. One such nutrient is potassium containing potash which is beneficial in the growth of crops. Trace elements which could optionally be added include magnesium, manganese, zinc, copper and sulphur.

### Example 1: MBM as organic waste source

MBM having a dry matter content of 99% was obtained and the average temperature of the MBM was determined as being 40°C. The MBM was mixed with fly ash and calcium oxide in the ratio 85:12:3 to form a dry mix. 3% water by weight was added to the dry mix to activate the total calcium oxide and to form a mix. The temperature of the mix was allowed to increase to 50°C and the mix was stored for 4 days to allow the mix to transform into fertiliser.

The components of the MBM and resultant fertiliser are compared in Table 2.

**Table 2: Components of MBM and fertiliser produced using MBM**

| **Component** | **MBM (%)** | **Fertiliser (%)** |
|---|---|---|
| Dry Matter | 99.00 | 97.80 |
| *Components within dry matter:* | | |
| Nitrogen | 6.97 | 6.45 |
| Phosphorus (available and bound) | 6.39 | 5.51 |
| Potassium | 0.17 | 0.18 |
| Calcium | 21.99 | 28.03 |
| Sulphur | 0.07 | 0.31 |
| Other non-volatile solids | 3.11 | 7.02 |
| Volatile solids | 60.30 | 50.30 |
| Moisture | 1.00 | 2.20 |

### Example 2: Green waste as organic waste source

The fertiliser was produced as outlined in Example 1 with green waste as the organic waste source and with the following additional modifications as tabulated in Table 3.

**Table: 3 Components and processing conditions**

| **Parameter** | **Value** |
|---|---|
| Green Waste | 75% by weight of dry mix |
| Fly ash | 24% by weight of dry mix |
| Calcium Oxide | 1% by weight of dry mix |
| Water | 3% by weight |
| Temperature of green waste | 10°C |
| Increased temperature | 28°C |
| Storage time | 10 days |

The components of the green waste and resultant fertiliser are compared in Table 4.

**Table 4: Components of green waste and fertiliser produced using green waste**

| **Component** | **Green Waste (%)** | **Fertiliser (%)** |
|---|---|---|
| Dry Matter | 65.00 | 80.00 |
| *Components within dry matter:* | | |
| Nitrogen | 3.71 | 2.60 |
| Phosphorus (available and bound) | 4.31 | 3.60 |
| Potassium | 0.36 | 0.59 |
| Calcium | 0.66 | 5.59 |
| Sulphur | 0.07 | 0.54 |
| Other non-volatile solids | 22.59 | 26.88 |
| Volatile solids | 33.30 | 40.20 |
| Moisture | 35.00 | 20.00 |

### Example 3: Poultry waste as organic waste source

The fertiliser was produced as outlined in Example 1 with poultry waste as the organic waste source and with the following additional modifications as tabulated in Table 5.

**Table: 5 Components and processing conditions**

| **Parameter** | **Value** |
|---|---|
| Poultry Waste | 95% by weight of dry mix |
| Fly ash | 0% by weight of dry mix |
| Calcium Oxide | 5% by weight of dry mix |
| Water | 5% by weight |
| Temperature of green waste | 50°C |
| Increased temperature | 54°C |
| Storage time | 3 days |

**Table 6: Components of poultry waste and fertiliser produced using poultry waste The components of the poultry waste and the resultant fertiliser are compared in Table 6.**

| **Component** | **Poultry waste (%)** | **Fertiliser (%)** |
|---|---|---|
| Dry Matter | 67.00 | 82.00 |
| *Components within dry matter:* | | |
| Nitrogen | 6.48 | 6.00 |
| Phosphorus (available and bound) | 3.80 | 3.60 |
| Potassium | 0.14 | 0.17 |
| Calcium | 12.13 | 17.38 |
| Sulphur | 0.04 | 0.59 |
| Other non-volatile solids | 2.99 | 8.17 |
| Volatile solids | 41.42 | 46.09 |
| Moisture | 33.00 | 18.00 |

As indicated in the above examples, the fertiliser produced by the process of the invention is rich in plant nutrients. The non-volatile solids include other trace elements such as magnesium and manganese. The resultant fertiliser has been found to be both useful in plant growth and the regeneration of clay structure. The fertiliser of the invention has also been found to increase the humus level in the soil which greatly assists the soil nutrient uptake and water stability in times of low rain fall and maximum plant stress.

In the specification the terms "comprise, comprises, comprised and comprising" or any variation thereof and the terms "include, includes, included and including" or any variation thereof are considered to be totally interchangeable and they should all be afforded the widest possible interpretation and vice versa.

The invention is not limited to the embodiment hereinbefore described, but may be varied in both construction and detail within the scope of the claims.

## Claims

1. A process for producing a fertiliser from a mix comprising at least one source of activated calcium oxide and organic waste;
**characterised in that**;
the mix comprises greater than 70% organic waste by weight of the mix, and the organic waste has a dry matter content of greater than 65%, the process comprising:
obtaining the organic waste and determining the average temperature thereof;
mixing the organic waste with the at least one source of calcium oxide so as to provide a dry mix having a total calcium oxide content in the region of between 1% and 10% by weight, wherein the amount of calcium oxide required is dependent on the temperature of the organic waste;
adding to the dry mix between 2% and 6% water by weight to activate the total calcium oxide and to form the mix;
allowing the temperature of the mix to increase; and
storing the mix for a residence time dependent on both the temperature of the organic waste and the amount of total calcium oxide in the mix to transform the mix to fertiliser while allowing the fertiliser to cool to a temperature of less than 25°C.

2. A process for producing a fertiliser as claimed in claim 1, wherein the source of calcium oxide comprises one or more of fly ash having a calcium oxide content in the region of up to 50% by weight of the fly ash and pure calcium oxide.

3. A process for producing a fertiliser as claimed in claim 2, wherein the fly ash comprises between 12% and 40% calcium oxide by weight of the fly ash.

4. A process for producing a fertiliser as claimed in any of claims 2 or 3, wherein the amount of fly ash and/or calcium oxide added is such as to provide a total calcium oxide content of between 3% and 8% by weight.

5. A process for producing a fertiliser as claimed in any preceding claim, wherein the temperature of the organic waste is between 10°C and 55°C.

6. A process for producing a fertiliser as claimed in any preceding claim, wherein the temperature of the organic waste is between 20°C and 40°C.

7. A process for producing a fertiliser as claimed in any preceding claim, wherein the organic waste has a dry matter content of greater than 92%.

8. A process for producing a fertiliser as claimed in any preceding claim, wherein the mix comprises between 80% and 95% organic waste by weight of the mix.

9. A process for producing a fertiliser as claimed in any preceding claim, wherein the organic waste is selected from the group comprising one or more of meat and bone meal, green waste, poultry waste, and mushroom waste.

10. A process for producing a fertiliser as claimed in any preceding claim, wherein the residence time is between 3 and 12 days.

11. A process for producing a fertiliser as claimed in any preceding claim wherein the fertiliser has a dry matter content of greater than 75%.

12. A process for producing a fertiliser as claimed in any preceding claim, further comprising pelleting or prilling the fertiliser.

13. A fertiliser prepared from a mix comprising at least one source of activated calcium oxide and organic waste;
**characterised in that**;
the mix comprises greater than 70% organic waste by weight of the mix, and the organic waste has a dry matter content of greater than 65%.
